# EUROPEAN PATENT APPLICATION

(11) **EP 4 697 577 A1**
(43) Date of publication of application: **18.02.2026**
(21) Application number: 24194135.0
(22) Date of filing: 12.08.2024
(51) Int. Cl.: H02M 3/158, H02M 1/00

(54) **DC-DC POWER CONVERTER WITH PULSE-FREQUENCY CONTROL**

(71) Applicant: Semtech Corporation, Camarillo CA 93012-8790 (US)
(72) Inventor: Vandel, Eric, 1426 Concise (CH); Villier, Stéphane, 2074 Marin-Epagnier (CH)
(74) Representative: P&TS SA (AG, Ltd.)

(57) **Abstract**

DC/DC converter operated in PFM mode, with an analogue timing circuit that generates the charging time and the discharging time based on the input voltage and the output voltage. The converter does not rely on a zero crossing detector and has a slow feedback loop that corrects either the charge time or the discharge time such that the residual current circulating in the inductor tends to zero at the end of the discharge phase. The inductor's current is sampled at the end of the discharge.

## Description

### Technical domain

The present invention concerns, in embodiments, an inductive DC/DC power converter, in particular a low-power converter controlled by pulse-frequency modulation.

### Related art

A DC/DC inductive converter is a switched-mode power circuit that steps up or down voltage from an input, connected to a power supply, to an output, from which the power flows into a load. The conversion is done by controlling the current flowing into an inductor with switches, the inductor being used as an energy storage device, cyclically charged from the power supply and discharged into the load.

There are many known variant of DC/DC converters that differs in the number and disposition of the switches. They include step-down converters that operate a reduction of the voltage level from the input to the output and step-up converters, which operate in the opposite way, providing an output voltage higher than the input one. There are also converters that have an output voltage that can be set in a range including values higher and lower than the input voltage as well as inverting converters that have an output voltage opposed to the input one in polarity.

The energy efficiency of inductive DC/DC converters can be remarkable, and they are generally more compact and economical than other solutions, for example capacitive converters. Accordingly, they are used in many applications at all power levels, from micropower converters in loT devices to kilowatt or megawatt converters used in traction and power transmission applications.

Switches are essential to the operation of DC/DC converters. They can be implemented in many ways, most commonly with field-effect transistors. In some simple realizations some switches that operate synchronously with the polarity of the transmitted current can be replaced by diodes. This simplification comes at a price in efficiency because of the diode's forward voltage drop.

The size and cost of the inductor contribute consistently to the size and cost of the whole product and there is a trend of increasing the cyclic frequency to reduce them, for a given power.

The output level is controlled through the cyclic parameters of the converter. One knows pulse-width modulation (PWM) converters whose cyclic frequency is kept constant and control the output level by acting on the duration of the charge phase, and pulse-frequency modulation (PFM) where the output level is controlled by raising and lowering the fundamental frequency of the cycle (also known as the "carrier frequency"). The latter variety may be preferable in micropower converters because of its simplicity.

For optimal efficiency in PFM converters, it is desirable that the energy of the inductor be completely discharged at each cycle. It is known to use a zero-crossing detector to detect the instant at which the inductor's current is null and stop the discharge. Zero-crossing detectors, however, consume power, which reduces the efficiency of the converter for small loads, and exhibit offsets and variable delays that must be calibrated or compensated in some manner.

### Short disclosure of the invention

An aim of the present invention is the provision of a DC/DC converter that overcomes the shortcomings and limitations of the state of the art.

Another aim of the invention is providing a converter that is especially suitable for supplying small loads in an efficient manner.

According to the invention, these aims are attained by the object of the attached claims, and especially by a DC/DC converter having a cyclically driven inductor, each cycle having a charging phase lasting for a charging time in which the inductor is charged by an input voltage and a discharging phase lasting for a discharging time in which the inductor is discharged into a load, comprising a frequency generator circuit configured to determine a cyclic frequency of the converter suitable to obtain a desired output voltage and a timing circuit responsive to the values of the input voltage and of the output voltage, the timing circuit being configured to determine the charging time and the discharging time.

Additional useful features are introduced in the dependent claims and include: a charging time is proportional to the output voltage, and a discharging time is proportional to the difference between input voltage and output voltage, the control of the output voltage through the cyclic frequency (FDM), a sampling quiescent phase after the discharge phase, in which a current in the inductor is essentially zero, and a residual value of the inductor's current is sampled, a timing circuit determining the cyclic phases by acting on MOS switches.

The timing circuit may determine the duration of the charge phase by a first capacitor discharged by a first constant current and the duration of the discharge phase by a second capacitor discharged by a second constant current, the charging time starting when a voltage across the first capacitor is equal to a first predetermined pre-charge voltage and ending when the voltage across the first capacitor is equal to a reference voltage, the discharging time starting at the end of the charging time when a voltage across the second capacitor is equal to a second pre-charge voltage and ending when the voltage across the second capacitor is equal to the reference voltage. By setting the first and second capacitor being in the same ratio as the second and first constant currents and choosing the pre-charge voltage and the reference voltage proportional to the input and/or to the output voltages, the timing circuit ensures that the inductor's current returns to zero at the end of the discharge, for maximum efficiency. The proportionality of the currents can be obtained by current mirrors.

The DC/DC converter may include a feedback tuning circuit configured to measure a residual current flowing in the inductor at the end of the discharge phase and act on the discharging time such that the residual current is reduced. The feedback tuning circuit may have a store capacitor that holds a charge dependent on the residual current that is presented at a substrate terminal of one transistor in the current mirror. A switchable sense resistor across the inductor can be used for measuring the residual current.

### Short description of the drawings

Exemplar embodiments of the invention are disclosed in the description and illustrated by the drawings in which:
Figures 1a and 1b illustrate schematically two cyclic phases of a buck-type converter: a charge phase, respectively a discharge phase.
Figure 1c shows schematically a four-switch buck/boost converter.
Figure 2 plots the current flowing through the inductor in the charge phase and in the discharge phase.
Figure 3 is a simplified schematic of a timer circuit used in the invention to determine the succession of charge and discharge
Figure 4 plots an analogue voltage *V*_{comp} present in the circuit of figure 3
Figure 5 is a simplified diagram of the converter of the invention including the timing circuit and a current-sampling part that generates a correction signal.
Figures 6 and 7 plot some analogue and digital signals of the converter.

In the figures, remarkable elements are identified by reference signs that are repeated in the text. The same reference sign is used to identify distinct elements that are identical or functionally equivalent. When many instances of an element are present, some reference signs may have been omitted to avoid overcrowding the figures.

### Examples of embodiments of the present invention

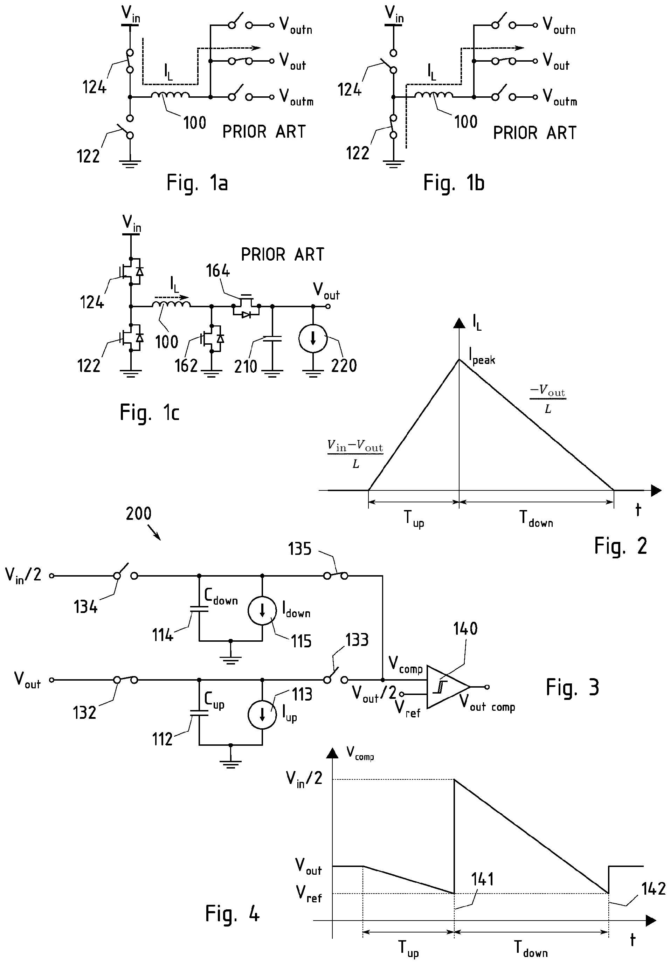

Figures 1a and 1b illustrate schematically the cyclic operation of a buck-type DC/DC converter with multiple outputs. This disclosure will refer mostly to buck converters, for brevity, but this is not a limitation of the invention, which could be adapted to any other form of switched inductive converter, within the limits set by the attached claims. The converter is represented with multiple outputs (out, outₘ, outₙ), but this is not an essential feature of the invention.

Figure 1c shows, for example, the known structure of a four-switch converter that can be controlled to operate in buck mode, in boost mode or in buck-boost mode according to the timing of the switches 122, 124, 162, 164. In this case the converter has a single output, and the switches are embodied by field-effect transistors. The figure also shows a filter output capacitor 210 and a load 220 that were omitted from schematics 1a and 1b but are generally present.

The converter comprises an inductor that 100 is used to store energy form the input *V*ᵢₙ and transfer it to the output *V*ₒᵤₜ. This is obtained by a cyclic alternation of the charging phase shown in figure 1a and the discharging phase of the figure 1b. In the charging phase, the upper switch 124 is closed and the lower switch 122 is open. This lets the current coming from the input *V*ᵢₙ flow into the inductor 100 and to the output *V*ₒᵤₜ. In the discharge phase, the upper switch 124 is open and the lower switch 122 is closed, whereby the current flows from the ground potential through the inductor 100 to the output. The inductor's current *I_{L}* and its voltage drop are linked by the known relation *V_{L}* = *-LdI_{L}*/*dt*; therefore, in the charging phase, the inductor's current is rising with slope (*V*ₒᵤₜ - *V*ᵢₙ)/*L* and in the discharging phase, the current falls with slope *- V*ₒᵤₜ/*L*. Assuming that *V*ₒᵤₜ and *V*ᵢₙ are constant, the inductor's current will show the profile of figure 2, with a linear rising ramp in the charging phase up to a peak value *I*ₚₑₐₖ, followed by a linear decreasing ramp.

To optimize the efficiency in discontinuous mode (at the end of the cycle all all the energy stored in the inductor is discharged) the inductor's current should reach zero at the end of the discharge phase. If the current is allowed to reverse sense because the discharge phase is too long, the output will discharge through the inductor. If, on the other hand the inductive energy is not completely discharged at the end of the cycle, it will be transferred to the load through a parasitic, less efficient, path, or be totally lost. This is obtained in the art with zero-crossing detectors, with the limitations mentioned above.

The converter of the invention does not have a zero crossing detector, but uses a timing circuit that is responsive to the values of *V*ᵢₙ and *V*ₒᵤₜ, and generates pulses having lengths *T*ᵤₚ and *T*_{down} that are used to control the switches and the converter determining the charge phase and the discharge phase, the circuit is configured such that lengths *T*ᵤₚ and *T*_{down}, are in a predetermined relationship that causes the inductor's current to reach zero at the end of the discharge phase. For the buck converter that is used to draw the plot of figure 2, the relationship is that *T*ᵤₚ is proportional to *V*ₒᵤₜ, and *T*_{down} proportional to (*V*ᵢₙ - *V*ₒᵤₜ). Similar proportionality rules can readily be devised for all kind of inductive DC/DC converters.

Figure 3 is a diagram of the timing circuit of the invention, highly simplified. In a first phase that generates the charging interval *T*ᵤₚ, the capacitor 112 is charged to *V*ₒᵤₜ by closing momentarily switch 132, and discharged by current source 113 that sinks a constant current *I*ᵤₚ. This generates a linear voltage ramp that is fed to a first input *V*_{comp} of the discriminator 140 through switch 133 which is closed in this phase, while switch 135 is open. The second input *V*_{ref} of the discriminator 140 is tied to a fixed voltage equal to *V*ₒᵤₜ/2, for example. This figure represents a single-phase implementation of the converter fir simplicity, but the invention is not limited to this and encompasses converters with any number of output phases.

When the inputs *V*_{comp} and *V*_{ref} are equal, the timing circuit generates a pulse that ends the charging interval *T*ᵤₚ. Immediately after, the timing circuit start a second phase that generate the discharging interval *T*_{down}. The switches 133 and 135 flip state, the second capacitor 114 that has been charged to *V*ᵢₙ/2 by closing momentarily the switch 134 is discharged by current source 115 that sinks a constant current *I*_{down}. When the resulting linear ramp voltage reaches the value *V*_{ref}, a second pulse is generated, which ends the discharge period.

Figure 4 shows the variation of the comparison voltage *V*_{comp} in the first and second phase. At instants 141 and 142 the two inputs of the comparator 140 are equal, and this determines the end of the charge phase, respectively the discharge phase. It can be seen that, if the capacitors 114 and 115 have proportional values and the source current 115 and 113 are in the same ratio, then *T*ᵤₚ is proportional to *V*ₒᵤₜ and *T*_{down} is proportional to (*V*ᵢₙ - *V*ₒᵤₜ), as required for efficiency. This can be obtained by dimensioning the capacitors 112, 114 and linking the sources 113, 115 in ab current mirror, for example. The proportionality factor can be 1, that is *C*ᵤₚ = *C*_{down} and *I*ᵤₚ = *I*_{down}, but other factors are possible.

The timing circuit of the invention is so configured that it generates a timing signal for *T*ᵤₚ and *T*_{down}, based on the values of *V*ᵢₙ and *V*ₒᵤₜ such that the inductor is fully discharged at the end of the discharge phase. Remarkably, the timing circuit does not need additional information and does not attempt to determine the zero-crossing of the inductor's current. The timing circuit of figure 3 can be adapted to provide the same useful result with other topologies of DC/DC converters, for example a boost converter, an inverting converter, or a buck-boost converter as that of figure 1c, by choosing suitable values for the pre-charge levels of the capacitors 112, 114 and for the level *V*_{ref}. The latter may change between the charge phase and the discharge phase, if needed.

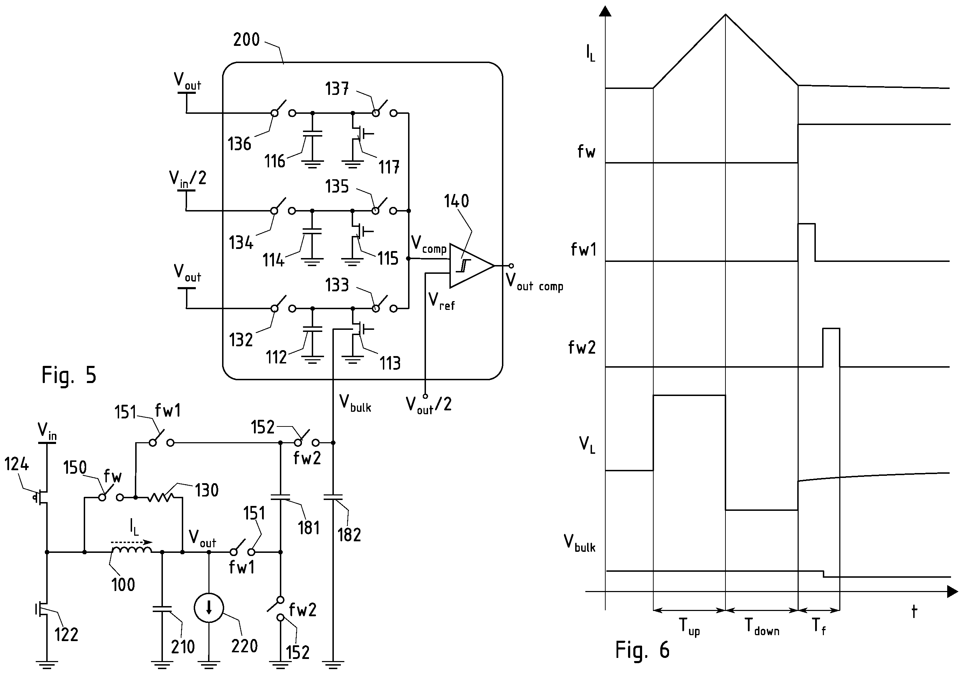

Figure 5 shows again an example of converter according to the invention, with extra details. The topology is again that of a step-down converter, and the load 220 and the output filter capacitor 210 are represented. In the charge phase, the MOS 124 is driven in conduction while the lower MOS 122 is not conducting, the inductor's current rises for a time *T*ᵤₚ determined by the timing circuit 200, until it reaches a peak. In the discharge phase, which follows immediately the charge phase, the upper MOS switch 124 is not conducting, while the lower MOS switch 122 is in conduction. The inductor's current decreases for a time *T*_{down} that is again determined by the timing circuit 200 until it is essentially zero.

This variant of the invention include a feedback loop that correct the length of the discharge period *T*_{down} based on a residual value of the inductor's current *I_{L}* at the end of the discharge. This correction loop compensates small deviations from the ideal behaviour of the timing circuit 200 such that the converter operates always at optimal efficiency. In another non represented alternative, the length of the charging period could be corrected in the opposite sense, to the same effect.

At the end of the discharge cycle, the converter enters a phase of sampling the residual inductor's current *I_{L}.* This phase lasts for a short time interval *T_{f}* that could be determined by the timing circuit 200 through an addition capacitor 116 discharging through a current source 117, or in any other way. In this period the switch 150, which during the charge and the discharge is open, and the inductor's current closes on the short loop constituted by the inductor 100, the sense resistor 130 and the switch 150. Preferably, the value Rₛₑₙₛ of the resistor 130 is chosen low enough such that the voltage drop across the inductor is considerably smaller than in the charge and discharge phases, such that the inductor's current can be regarded as constant in this phase, but high enough to provide enough voltage gain since the sensed voltage is Vₛₑₙₛ=I_{L}·Rₛₑₙₛ Shortly after the closure of the switch 150, the switch 151 is closed momentarily, storing the voltage drop across the resistor 130 in capacitor 181. After the reopening of switch 151, the two switches 152 are closed momentarily and capacitor 181 is put in parallel with capacitor 182. Capacitor 182 is significantly larger than 181, which allows to progressively integrate the information of residual current error. (181 and 182 are working as a passive integrator) in the voltage *V*_{bulk}.

There are other ways of obtaining a signal proportional to the residual current, all included in the scope of the invention. The inventors, however, have found that a switched-capacitor circuit as the one disclosed is advantageous for its simplicity and low power consumption.

The voltage *V*_{bulk} is fed back to the timing circuit 200. A positive value of the residual *I_{L}* causes a lengthening of the discharge time *T*_{down} (or equivalently, a shortening of the charge time *T*ᵤₚ) such that *I_{L}* is brought back towards zero. This is done, in this example, by applying the correction signal to the substrate of the final transistor of the current sink 113. Other manner of achieving this are possible without leaving the invention, however. The net effect of this correction is that the residual *I_{L}* converges to zero. The action of the feedback circuit may be slow in comparison to the cyclic time, in the sense that the *I_{L}* is gradually brought to zero along several cycles.

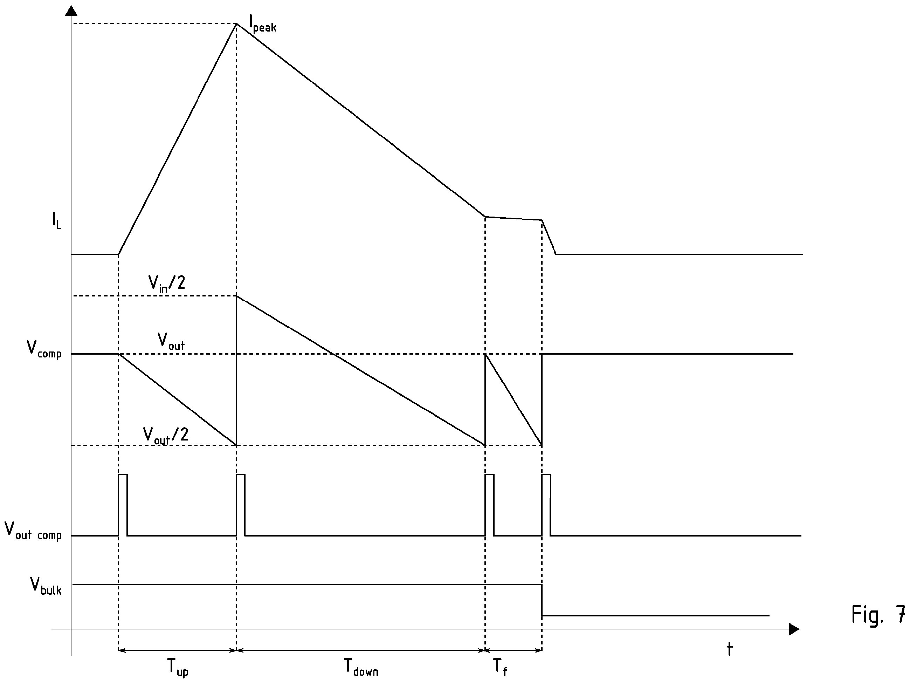

Figures 6 shows the variations of the inductor's current and voltage, the operation of the switches used in sampling the residual value of *I_{L},* and of *V*_{bulk}. Figure 7 plots the variations of *V*_{comp} and of the output of the timing circuit 200.

### Reference signs in the figures

- 100: inductor
- 112: capacitor used to determine *T*ᵤₚ
- 113: current source used to determine *T*ᵤₚ
- 114: capacitor used to determine *T*_{down}
- 115: current source used to determine *T*_{down}
- 116: capacitor used to determine *T_{f}*
- 117: current source used to determine *T_{f}*
- 122: first switch of the DC/DC converter
- 124: second switch of the DC/DC converter
- 130: sense resistor
- 132: pre-charge switch
- 133: switch
- 134: pre-charge switch
- 135: switch
- 136: pre-charge switch
- 137: switch
- 140: discriminator
- 141: trigger times
- 150: freewheeling switch
- 151: first sampling switch
- 152: second sampling switch
- 162: third switch of the DC/DC converter
- 164: fourth switch of the DC/DC converter
- 181: first sampling capacitor
- 182: second sampling capacitor
- 200: timing circuit
- 210: output capacitor
- 220: load

## Claims

1. DC/DC converter for transforming an input voltage (*V*ᵢₙ) into a desired output voltage (*V*ₒᵤₜ) having a cyclically driven inductor (100), each cycle having a charging phase lasting for a charging time (*T*ᵤₚ) in which the inductor (100) is charged by the input voltage (*V*ᵢₙ) and a discharging phase lasting for a discharging time (*T*_{down}) in which the inductor is discharged into a load (220) receiving the output voltage (*V*ₒᵤₜ), comprising a timing circuit (200) responsive to the values of the input voltage (*V*ᵢₙ) and of the output voltage (*V*ₒᵤₜ), the timing circuit (200) being configured to determine the charging time and the discharging time.

2. The DC/DC converter of the preceding claim, wherein the timing circuit is configured such that the charging time (*T*ᵤₚ) and the discharging time (*T*_{down}) are in a predetermined relationship that causes a current (*I_{L}*) flowing in the inductor (100) to reach zero at the end of the discharging phase

3. The DC/DC converter of any one of the preceding claims, wherein the charging time (*T*ᵤₚ) is proportional to the output voltage, and the discharging time (*T*_{down}) is proportional to the difference between input voltage and output voltage.

4. The DC/DC converter of any one of the preceding claims, the timer circuit (200) being analogue.

5. The DC/DC converter of any one of the preceding claims, in which each cycle has a quiescent phase during which a current (*I_{L}*) flowing in the inductor (100) is essentially zero.

6. The DC/DC converter of any one of the preceding claims, in which the timing circuit determines the cyclic phases by acting on MOS switches.

7. The DC/DC converter of any one of the preceding claims, wherein the timing circuit (200) comprises a first capacitor (112) discharged by a first constant current (*I*ᵤₚ), a second capacitor (114) discharged by a second constant current (*I*_{down}) and a comparator (140) determining when a voltage across either the first capacitor (112) or the second capacitor (114) equals a reference voltage (*V*_{ref}), the first capacitor being pre-charged to a first initial voltage value at the start of the charging phase, the charging phase ending when the voltage across the first capacitor is equal to the reference voltage, the second capacitor (114) being pre-charged to a second initial voltage at the start of the discharging phase, the discharging phase ending when a voltage across the second capacitor is equal to the reference voltage.

8. The DC/DC converter of the preceding claim, wherein the reference voltage is equal to *V*ₒᵤₜ/2, the first initial voltage is equal to *V*ₒᵤₜ, the second initial voltage is equal to *V*ᵢₙ/2, the first and second capacitor being in the same ratio as the second and first constant currents.

9. The DC/DC converter of any one of the preceding claims, wherein the timing circuit (200) includes a feedback tuning circuit configured to measure a residual current flowing in the inductor (100) at the end of the discharge phase and act on the discharging time and/or on the charging time such that the residual current is reduced.

10. The DC/DC converter of claims 7 and 9, with a current mirror generating the first constant current and the second constant current, wherein the feedback tuning circuit includes a store capacitor (182) that holds a charge dependent on the residual current that is presented at a substrate terminal of one transistor in the current mirror.

11. The DC/DC converter of claim 9, comprising a switchable sense resistor (130) across the inductor (100) for measuring the residual current.

12. The DC/DC converter of the previous claim, including an arrangement of switched capacitor configured as a passive integrator yielding a voltage level indicative of the residual current.

13. The DC/DC converter of any one of the preceding claims, configured to operate in variable-frequency mode, the cycle having a nonconstant frequency.

14. The DC/DC converter of any one of the preceding claims, being a buck converter, or a boost converter or a buck/boost converter or an inverting converter.
